**Europäisches Patentamt**

**European Patent Office**

**Office européen des brevets**

(19)

(11) Veröffentlichungsnummer: **0 331 028 B1**

## (12) EUROPÄISCHE PATENTSCHRIFT

(45) Veröffentlichungstag der Patentschrift:
**30.10.91 Patentblatt 91/44**

(51) Int. Cl.⁵: **F25J 3/02,** C01B 23/00,
**F25J 3/08**

(21) Anmeldenummer: **89103255.9**

(22) Anmeldetag: **24.02.89**

(54) **Verfahren zur Reinigung von Rohargon.**

(30) Priorität: **01.03.88 DE 3806523**

(43) Veröffentlichungstag der Anmeldung:
**06.09.89 Patentblatt 89/36**

(45) Bekanntmachung des Hinweises auf die
Patenterteilung:
**30.10.91 Patentblatt 91/44**

(84) Benannte Vertragsstaaten:
**BE DE ES FR GB IT NL SE**

(56) Entgegenhaltungen:
**EP-A- 0 017 538**
**EP-A- 0 171 711**

(73) Patentinhaber: **Linde Aktiengesellschaft
Abraham-Lincoln-Strasse 21
W-6200 Wiesbaden (DE)**

(72) Erfinder: **Schönpflug, Eugen, Dipl.-Ing.
Winterstrasse 29
W-8122 Penzberg (DE)**

(74) Vertreter: **Schaefer, Gerhard, Dr.
Linde Aktiengesellschaft Zentrale
Patentabteilung
W-8023 Höllriegelskreuth (DE)**

# Beschreibung

Die Erfindung betrifft ein Verfahren zur Reinigung von Rohargon, das teils flüssig, teils gasförmig anfällt, bei dem das flüssig angefallene Rohargon einer Druckerhöhung unterzogen und anschließend verdampft wird, und bei dem der im Rohargon enthaltene Sauerstoff mit zugeführtem Wasserstoff zu Wasser reduziert, das gebildete Wasser aus dem Gasgemisch abgetrennt und das verbleibende Gasgemisch abgekühlt und durch Rektifikation in eine flüssige Reinargonfraktion und eine Restgasfraktion zerlegt wird.

Als Rohargon wird ein Gemisch bezeichnet, das etwa 90 bis 99% (bezogen auf das Volumen) Argon und außerdem geringe Mengen von Sauerstoff und Stickstoff enthält. Ein solches Gemisch fällt beispielsweise im Kopf einer Rohargonsäule an, die an eine Anlage zur Tieftemperaturzerlegung von Luft angeschlossen ist. Um aus Rohargon reines Argon (ca. 99,999%) zu gewinnen, muß das Rohargon gereinigt werden, beispielsweise durch Rektifikation in einer Reinargonsäule.

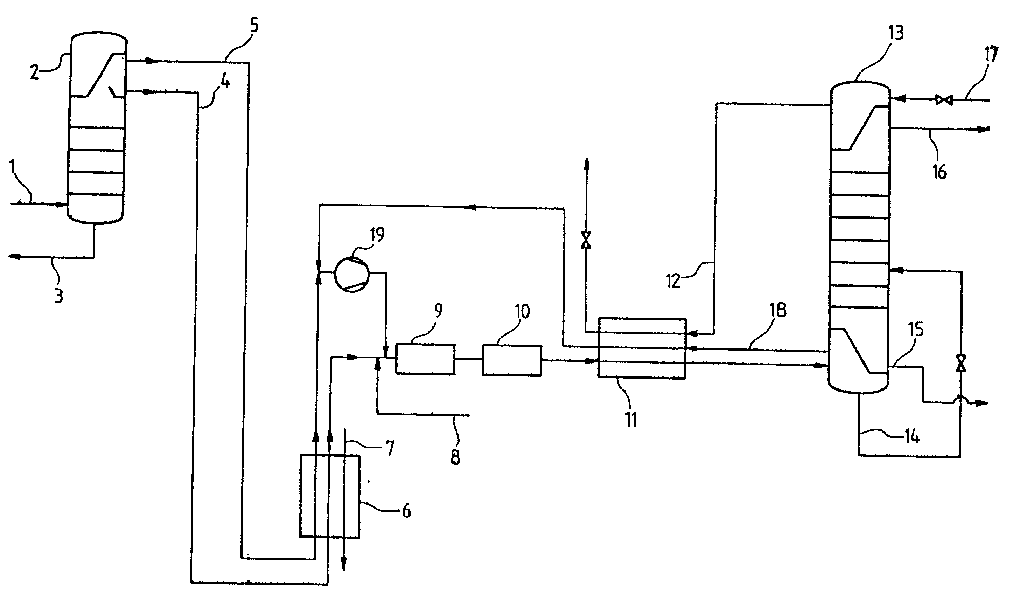

Bei einem Verfahren dieser Art, das aus der EP-A-0171711 (Figur 2) bekannt ist, wird Rohargon flüssig aus dem Kopf der Rohargonsäule entnommen. Um Betriebsstörungen in der Rohargonsäule zu verhindern, wird ein Teil des Rohargons gasförmig herausgeführt und zur Luftzerlegung zurückgeleitet. Das flüssig entnommene Rohargon erfährt eine Druckerhöhung unter Ausnützung seines hydrostatischen Potentials und wird anschließend verdampft. Nach dem Zumischen von Wasserstoff wird der im Rohargon enthaltene Sauerstoff reduziert und das entstandene Wasser in einem Trockner entfernt. Das verbleibende Gasgemisch wird abgekühlt und schließlich in die Reinargonsäule eingeleitet. Die EP-A-0171711 zeigt außerdem die Rückführung von nach der Reduktion in dem Gasgemisch verbliebenem Wasserstoff.

Ein solches Verfahren ist zwar einerseits günstig, da zur Erhöhung des Drucks des Rohargons keine Maschine benötigt wird, andererseits ist es wirtschaftlich nicht zufriedenstellend, insbesondere dadurch, daß ein Teil des bereits gewonnenen Rohargons wieder zur Luftzerlegung zurückgeführt wird, also bereits geleistete Trennarbeit dem Verfahren verlorengeht.

Die Aufgabe der vorliegenden Erfindung besteht darin, ein solches Verfahren wirtschaftlich günstiger zu gestalten, insbesondere durch Erhöhung der Argonausbeute.

Diese Aufgabe wird bei einem gattungsgemäßen Verfahren, bei dem zusätzlich nach dem Abtrennen des Wassers ein wasserstoffhaltiges Gas vom verbleibenden Gasgemisch abgetrennt und dem Rohargon vor dem Reduzieren wieder zugeführt wird, dadurch gelöst, daß das gasförmig angefallene Rohargon verdichtet und dem flüssig angefallenen Rohargon nach dem Verdampfen zugeführt wird, wobei das gasförmig angefallene Rohargon gemeinsam mit dem wasserstoffhaltigen Gas verdichtet wird.

Das gasförmig angefallene Rohargon geht auf diese Weise für die Reinargongewinnnung nicht verloren, sondern trägt zu einer insgesamt sehr hohen Argonausbeute bei. Der Vorteil der günstigen Art der Erhöhung des Drucks des flüssig entnommenen Rohargons kann dabei erhalten werden. Dabei ist zu berücksichtigen, daß bei der üblichen Rohargongewinnung ein Teil des Rohargons immer gasförmig entnommen werden muß, damit der Kopfkondensator der Rohargonsäule nicht durch nichtkondensierbare Gase blockiert wird.

Für die Verdichtung des gasförmig angefallenen Rohargons wird der Verdichter eingesetzt, der ohnehin benötigt wird, um den zurückgeführten Wasserstoff zu komprimieren. Dadurch kann die hohe Argonausbeute mit sehr geringem apparativen Aufwand erreicht werden.

Im folgenden werden die Erfindung sowie weitere Einzelheiten der Erfindung anhand eines in der Figur schematisch dargestellten Ausführungsbeispiels näher erläutert.

Eine Rohargonsäule 2 ist über eine Zuführungsleitung 1 und eine Abführungsleitung 3 mit einer nicht dargestellten Anlage zur Luftzerlegung verbunden. Die Rohargonsäule 2 wird unter einem Druck von 1,1 bis 3 bar, üblicherweise etwa 1,2 bar betrieben. Als Kopfprodukt wird Rohargon mit einer Temperatur von 88 bis 100 K, vorzugsweise 89 K gewonnen. Rohargon besteht zu 90 bis 99%, vorzugsweise zu etwa 95% aus Argon und enthält darüberhinaus Sauerstoff und Stickstoff.

Der größte Teil (80 bis 97%, vorzugsweise 90 bis 95%) des Rohargons wird über eine Flüssigkeitsleitung 4 in flüssigem Zustand entnommen. Das Gefälle in der Flüssigkeitsleitung 4 ist so groß, daß der Druck des flüssigen Rohargons auf 3 bis 5, vorzugsweise 4 bar erhöht wird. Anschließend wird das flüssige Rohargon in einem Wärmetauscher 6 im Gegenstrom zu einem Anwärmgas (beispielsweise Luft oder Stickstoff) verdampft.

Über Leitung 8 wird Wasserstoff eingespeist, mit dem der im Rohargon enthaltene Sauerstoff in einem Reaktor 9 zu Wasser reduziert wird. Danach folgt ein Trockner 10, in dem das bei der Reaktion gebildete Wasser abgetrennt wird. Das verbleibende Gasgemisch enthält im wesentlichen Argon, Stickstoff und Wasserstoff, der vor dem Reaktor 9 in der Regel im Überschuß zugemischt wird, um die restlose Entfernung des Sauerstoffs zu gewährleisten. Das Gasgemisch wird im Wärmetauscher 11 im Gegenstrom zu Stickstoff in Leitung 12 angewärmt und der Sumpfheizung einer Reinargonsäule 13 zugeführt, wo es zum größten Teil verflüssigt wird.

Der nunmehr flüssige Anteil des Gemisches wird über Leitung 14 weitergeführt, entspannt, in die Reinargonsäule 13 eingeführt und dort einer Rektifikation unterzogen, die unter einem Druck von 1,2 bis 2 bar, vorzugsweise 1,5 bar durchgeführt wird. Der Kopf der Reinargonsäule 13 wird dabei durch flüssigen Stickstoff (Leitung 17) gekühlt. Als Produktfraktionen werden flüssiges Argon 15 und Restgas 16 entnommen.

Der gasförmige Anteil des zur Sumpfheizung verwendeten Gemisches, der den überschüssigen Wasserstoff enthält, wird über Leitung 18 aus der Sumpfheizung herausgeführt, im Wärmetauscher 11 angewärmt in einem Verdichter 19 komprimiert und dem Rohargon vor dem Reaktor 9 zugemischt.

Um eine Blockierung des Kopfkondensators der Rohargonsäule 2 zu verhindern, wird ein geringer Teil des Rohargons (3 bis 20%, vorzugsweise 5 bis 10%) über eine Gasleitung 5 in gasförmigem Zustand entnommen. Dieses gasförmig entnommene Rohargon wird im Wärmetauscher 6 abgekühlt und erfindungsgemäß verdichtet (19) und dem flüssig entnommenen Rohargon, das im Wärmetauscher 6 verdampft wurde, zugeführt.

Gemäß einem weiteren Erfindungsmerkmal werden im Verdichter 19 das rückgeführte wasserstoffhaltige Gas und das gasförmig entnommene Rohargon gemeinsam verdichtet.

## Patentansprüche

1. Verfahren zur Reinigung von Rohargon, das teils flüssig, teils gasförmig anfällt, bei dem das flüssig angefallene Rohargon (4) einer Druckerhöhung unterzogen und anschließend verdampft (6) wird, und bei dem der im Rohargon enthaltene Sauerstoff mit zugeführtem Wasserstoff (8) zu Wasser reduziert (9), das gebildete Wasser aus dem Gasgemisch abgetrennt (10) und das verbleibende Gasgemisch abgekühlt (11) und durch Rektifikation (13) in eine flüssige Reinargonfraktion (15) und eine Restgasfraktion (16) zerlegt wird, wobei nach dem Abtrennen (10) des Wassers ein wasserstoffhaltiges Gas (18) vom verbleibenden Gasgemisch abgetrennt und dem Rohargon vor dem Reduzieren (9) wieder zugeführt wird, dadurch gekennzeichnet, daß das gasförmig angefallene Rohargon (5) verdichtet (19) und dem flüssig angefallenen Rohargon (4) nach dem Verdampfen (6) zugeführt wird, wobei das gasförmig angefallene Rohargon (5) gemeinsam mit dem wasserstoffhaltigen Gas (18) verdichtet (19) wird.

## Claims

1. Process for the purification of crude argon, which collects partly in liquid form and partly in gaseous form, in which the crude argon (4) which has collected in liquid form is subjected to a pressure increase and subsequently vapourised (6), and in which oxygen contained in the crude argon is reduced (9) with added hydrogen (8) to water, the water formed is separated (10) from the gas mixture and the remaining gas mixture is cooled (11) and is separated by residual rectification (13) into a liquid pure argon fraction (15) and a gas fraction (16), wherein, following separation (10) of the water, a hydrogen-containing gas (18) is separated from the remaining gas mixture and passed back to the crude argon prior to reduction (9), characterised in that the crude argon (5) which has collected in gaseous form is compressed (19) and is passed to the crude argon (4) which has collected in liquid form following vapourisation (6), wherein the crude argon (5) which has collected in gaseous form is compressed (19) together with the hydrogen-containing gas (18).

## Revendications

1. Procédé de purification d'argon brut, produit partiellement sous forme liquide, partiellement sous forme gazeuse, dans lequel l'argon brut (4) produit sous forme liquide subit une augmentation de pression et est ensuite vaporisé (en 6), et dans lequel l'oxygène contenu dans l'argon brut est réduit en eau par réaction avec de l'hydrogène (8), l'eau formée étant séparée du mélange gazeux (en 10) et le mélange gazeux restant étant refroidi (en 11) puis fractionné par rectification (en 13) en une fraction liquide d'argon pur (15) et en une fraction gazeuse résiduelle (16), un gaz contenant de l'hydrogène (18) étant séparé du mélange gazeux restant après la séparation (en 10) de l'eau et réuni à l'argon brut avant la réduction (9), caractérisé en ce que l'argon brut (5) produit sous forme gazeuse est comprimé (en 19) et réuni à l'argon brut (4) produit sous forme liquide après la vaporisation (6), de sorte que l'argon brut (5) produit sous forme gazeuse soit comprimé (en 19) en même temps que le gaz (18) contenant de l'hydrogène.